(19) **Europäisches Patentamt**

**European Patent Office**

**Office européen des brevets**

(11) **EP 0 904 700 B1**

(12) **EUROPÄISCHE PATENTSCHRIFT**

(45) Veröffentlichungstag und Bekanntmachung des Hinweises auf die Patenterteilung:
**12.04.2006  Patentblatt 2006/15**

(51) Int Cl.:
***A22C 13/00*** *(2006.01)*

(21) Anmeldenummer: **98117805.6**

(22) Anmeldetag: **19.09.1998**

(54) **Innenbeschichtete Nahrungsmittelhüllen auf Basis von regenerierter Cellulose**

Internally coated food casings based on regenerated cellulose

Enveloppes revêtues intérieurement pour aliments à base de cellulose régénérée

(84) Benannte Vertragsstaaten:
**BE DE FR**

(30) Priorität: **26.09.1997   DE 19742719**

(43) Veröffentlichungstag der Anmeldung:
**31.03.1999   Patentblatt 1999/13**

(73) Patentinhaber: **Kalle GmbH**
**65203 Wiesbaden (DE)**

(72) Erfinder:
• **Hammer, Klaus-Dieter Dr.Diplom-Chemiker**
**55120 Mainz (DE)**
• **Mans, Leo Dr. Diplom-Chemiker**
**55120 Mainz (DE)**

• **Grolig, Gerhard Dr. Diplom-Chemiker**
**64546 Mörfelden-Walldorf (DE)**

(74) Vertreter: **Plate, Jürgen et al**
**Zounek Plate Schweitzer**
**Patentanwaltskanzlei**
**Rheingaustrasse 196**
**65203 Wiesbaden (DE)**

(56) Entgegenhaltungen:
**EP-A- 0 224 060       DE-A- 2 933 108**
**DE-A- 2 933 131       DE-A- 2 935 080**
**DE-A- 3 328 050       FR-A- 2 305 290**
**FR-A- 2 305 291       GB-A- 814 760**

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung betrifft eine schlauchförmige Nahrungsmittelhülle auf Basis von regenerierter Cellulose mit einer Beschichtung auf ihrer inneren Oberfläche sowie ein Verfahren zu ihrer Herstellung. Die Hülle ist besonders als künstliche Wursthülle geeignet.

Faserverstärkte Nahrungsmittelhüllen auf Basis von regenerierter Cellulose mit einer auf der Außen- oder Innenseite aufgebrachten Schicht aus Polyvinylidenchlorid (PVDC) sind bereits bekannt. Die Beschichtung der Außenseite ist verfahrenstechnisch einfacher zu bewerkstelligen. Die innenbeschichteten Hüllen bieten dagegen bei der späteren Verarbeitung Vorteile. Denn sie können nach dem Füllen mit Wurstbrät ohne Beeinträchtigung Wasser abgeben und dadurch schrumpfen. Die Wurst behält so stets eine pralle Form. Es ist auch möglich, eine außenbeschichtete Hülle zu verwenden; das erfordert jedoch einen hohen technischen Aufwand. Dieses Verfahren hat sich daher nicht durchsetzen können.

Ein Problem bei der Beschichtung besteht darin, daß der Weichmacher (Glycerin) durch die Beschichtungsdispersion aus der Cellulosehydrathülle herausgelöst wird und sich in der Dispersion anreichert. Beim Flachlegen wie auch beim Raffen der Hülle wird die Beschichtung mechanisch extrem belastet. An dabei entstehenden Kanten und Falten wird die Beschichtung dadurch häufig auf Dauer geschädigt.

Eine für die Innenbeschichtung von Cellulosehydrathüllen geeignete Dispersion, die als wesentlichen Bestandteil ein Copolymer mit einem Anteil an Vinylidenchlorid(VDC)-Einheiten von 86 bis 92 Gew.-% enthält, ist in der DE-B 25 12 994 offenbart. Mit dieser Dispersion läßt sich eine Beschichtung herstellen, die bereits weitgehend die geforderten Eigenschaften hinsichtlich Dehnbarkeit und Festigkeit besitzt. Beim Lagern ändern sich diese Eigenschaften der Beschichtung nur wenig. Bei einem VDC-Anteil von 86 bis 92 % in dem Copolymer werden die optimalen Filmeigenschaften jedoch nur bei einem sehr hohen Molekulargewicht erzielt. Geeignet sind deshalb nur solche Copolymere, deren 1 gew.-%ige Lösung in Tetrahydrofuran (THF) eine relative Viskosität $\eta_{rel}$ von mehr als 3,0 aufweist. Während einer durchschnittlichen Lagerdauer von etwa 8 bis 10 Tagen bis zum Raffen erreicht der Film seine Endstruktur und damit eine ausreichende Festigkeit, so daß die Raffalten auch bei beliebig langer Lagerdauer der Raupen nicht geschädigt werden. Der Film ändert sich dann bei weiterem Lagern nicht mehr. Die Flachlegekanten, die in den noch warmen Film beim Verlassen der Maschine eingeprägt werden, werden dagegen beim Lagern mehr oder weniger geschädigt. Sie werden zwangsläufig zu früh in den Film eingeprägt, wodurch dieser deformiert wird. Bei weiterem Lagern nimmt die Deformation bis zur starken Schädigung an dieser Stelle zu, die sich beim Aufdehnen der gewässerten Hüllen entsprechend verstärkt. Das für diese Copolymeren erforderliche hohe Molekulargewicht ist nur durch eine langsame Polymerisation unter Kühlen zu erzielen. Diese Bedingungen führen jedoch zu monodispersen Dispersionen. Damit hergestellte Innenbeschichtungen werden beim Erhitzen in Wasser, wie es beim Brühen von Würsten üblich ist, trübe. Es bilden sich zunächst größere Poren, in die Glycerin eingeschlossen wird. Das Glycerin wird dann von außen - durch die Faserhülle hindurch - herausgelöst. Die zurückbleibenden Hohlräume erscheinen nach dem Trocknen als Trübung. An den Würsten wird durch diese Heißwassertrübung eine unerwünschte Fettabscheidung vorgetäuscht.

Eine schlauchförmige Hülle aus regenerierter Cellulose mit einer gas- und feuchtigkeitsundurchlässigen Sperrschicht auf der Innen- oder Außenseite ist in der DE-B. 23 38 418 ($\approx$ US-A 3 886 979 und 4 026 985) beschrieben. Die Sperrschicht hat bei 0 °C eine Dehnfähigkeit von mindestens 4 %. Die Sperrschicht kann aus einem Vinylidenchlorid-Copolymer, Polyethylen oder einem anderen Polyolefin, Polyester, Polyamid, Polyurethan oder einer Kombination daraus hergestellt werden. Nähere Angaben zu dem VDC-Copolymer fehlen.

Gegenstand der DE-B 29 06 118 (= US-A 4 267 094) ist ein Polymergemisch, mit dem sich auf Cellulosehydrat-Faserdärmen heißsiegelfähige Schichten mit guter Blockresistenz und Gleitfähigkeit herstellen lassen. Das Gemisch besteht aus einer VDC-Copolymer enthaltenden Komponente und einer funktionelle Gruppen aufweisenden, polymeren Verankerungsmittelkomponente, die Einheiten aus ungesättigten Carbonsäureamid-N-Methylol-Derivaten enthält.

Ein Kunstdarm auf Basis von regeneriertem Celluloseträgermaterial, der innen einen Überzug aus PVDC, Polyolefin oder Nitrocellulose besitzt, ist in der DE-B 13 02 384 (= US-A 3 369 911) offenbart. Erwähnt ist auch eine haftvermittelnde Zwischenschicht. Nähere Angaben zu dem PVDC fehlen jedoch völlig.

Faserverstärkte und nicht-faserverstärkte Cellulosehydrathüllen mit einer feuchtigkeits- und luftundurchlässigen Beschichtung sind auch in der DE-B 19 17 365 (= US-A 3 794 515) beschrieben. Die Beschichtung wird hergestellt durch Auftragen einer Lösung aus einem VDC-Homo- oder Copolymer, einem Polyisocyanat oder Polyester mit freien Isocyanatgruppen, einem Reaktionsprodukt aus einem Polyol mit Ethylenoxid, Propylenoxid oder Butylenoxid in einem niedrig siedenden Ether, Ester oder Keton, Trocknen der damit hergestellten Schicht und anschließendes Härten durch Erhitzen.

In der DE-A 29 33 108 ist eine schlauchförmige Verpackungshülle auf Basis von Cellulosehydrat offenbart, die insbesondere als künstliche Wursthülle vorgesehen ist. Sie weist auf der Innenseite eine dünne, für Wasserdampf durchlässige Beschichtung auf Basis von Vinylidenchlorid-Copolymeren und auf der Außenseite eine unterbrechungsfreie, für Wasserdampf undurchlässige polymere Beschichtung auf. Die Durchlässigkeit der auf der Innenseite befindlichen Beschichtung wird auf eine Velzahl an kleinen Durchbrechungen, offenen Poren und/oder extrem dünnen Flächenbereiche zurückgeführt. Die Innenbeschichtung ist zudem mit einem Flächengewicht 0,2 bis 2,0 g/m$^2$ sehr dünn, so daß bei der Erwärmung die einzelnen Partikel nicht zu einer durchgehenden, kontinuierlichen Schicht verschmelzen können. Die undurchlässige Außenbeschichtung wird vorzugsweise ebenfalls aus VDC-Copolymeren gebildet.

Bekannt ist auch eine Cellulosehydrathülle mit einer chlorfreien Polyacrylatbeschichtung (EP-A 0 457 178 = US-A 5 316 809), die durch die leichte Verschmelzung der dispergierten Teilchen stets einen trübungsfreien Film (ohne Glycerineinschlüsse) ausbildet. Ab einem bestimmten Molekulargewicht werden die Rafffalten und Kanten beim Lagern nicht geschädigt. Durch Erhöhen des Beschichtungsgewichts läßt sich zudem die schlechtere Wasserdampfbarriere kompensieren, so daß bei Brühwurst der Gewichtsverlust nicht höher liegt als bei einer PVDC-beschichteten Faserhülle. Eine ausreichende Sauerstoffbarriere ist allerdings auch dadurch nicht zu erzielen. Leberwürste verfärben sich nach spätestens 2 bis 3 Wochen an der Oberfläche durch Oxidation - gefordert wird dagegen eine Lagerfähigkeit von mindestens 6 Wochen. Ein Vorteil der chlorfreien, innenbeschichteten Faserhüllen besteht allerdings darin, daß sie biologisch abbaubar und kompostierbar sind sowie dioxinfrei auch bei Temperaturen von weniger als 600 °C verbrannt werden können.

Es bestand daher die Aufgabe, PVDC-Copolymere zu entwickeln, mit denen sich eine Innenbeschichtung herstellen läßt, die trübungsfrei und so fest und geschmeidig bleibt, daß Raffalten und Flachlegekanten bei beliebig langer Lagerdauer nicht geschädigt werden. Es ist ein Qualitätsniveau zu erreichen, wie es sonst nur durch eine Außenbeschichtung mit zwei Schichten übereinander zu erzielen ist. Für eine Innenbeschichtung ist also dieser komplizierte Kompromiß mit einem Copolymer anzustreben, denn innen ist naturgemäß nur eine Einfachbeschichtung möglich.

Mit steigendem VDC-Anteil im Copolymer verbessern sich die Barriereeigenschaften (Wasserdampf-, Sauerstoff- und Aroma-Durchlässigkeit) der damit hergestellten Beschichtungen; aber es nehmen auch Fehler zu, die durch den komplizierten Verbund Cellulosehydrat/PVDC verursacht werden. Die verbesserten Eigenschaften der Beschichtung wirken sich daher nicht auf das Qualitätsniveau der innenbeschichteten Wursthüllen aus, sie verringern es eher. So lassen sich Beschichtungsfehler sowie die Schädigung von Raffalten und Kanten bei hohem VDC-Gehalt zunehmend schwerer vermeiden.

Bei den VDC-Copolymeren gemäß der DE-B 25 12 994 (= US-A 4 233 341), die einen hohen Anteil an VDC aufweisen (86 bis 92 Gew.-% VDC) wird zwar durch ein entsprechend hohes Molekulargewicht (rel. Visk.: größer als 3,0) eine Schädigung der Raffalten verhindert, weil das Raffen erst nach Beendigung der Strukturbildung (Kristallisation) ausgeführt wird. Aber bei den Flachlegekanten kann dieser Prozeß nicht abgewartet werden, sie werden stets zu früh in den noch warmen Film eingeprägt, wodurch dieser deformiert wird. Die Deformation nimmt beim Lagern zu und führt beim Aufdehnen zu sichtbaren Fehlstellen an der Wurst.

Ein weiteres entscheidendes Defizit ist eine schwankende Heißwassertrübung beim Brühen, die durch Monodispersität hervorgerufen wird. Das für die angestrebten Eigenschaften erforderliche hohe Molekulargewicht bei diesem hohen VDC-Gehalt wird nur durch eine langsame Polymerisation unter Kühlen erreicht, die zwangsläufig zu Monodispersität führt.

Trübung und Fehler hängen aber auch vom Grundmaterial ab. Je höher seine Permeation, desto leichter und zu einem höheren Grad wird Glycerin aufgenommen und aus dem sich (von der inneren Oberfläche aus) bildenden Polymerfilm entfernt. Umso besser wird der Film zudem verschmolzen, so daß die Schädigung von Kanten oder Raffalten abnimmt.

Es bestand daher die Aufgabe, ein Copolymer zu entwickeln, dessen Filmstruktur unabhängig von der Teilchengrößenverteilung ist. Insbesondere soll es besser verschmelzen als die Typen mit hohem VDC-Anteil. Die damit hergestellte Beschichtung soll zudem sofort nach Verlassen der Beschichtungsmaschine eine ausreichende Festigkeit und Zähigkeit annehmen, so daß die Flachlegekanten beim Lagern nicht geschädigt werden. Bisher war dies allein mit einer Beschichtung auf Basis von $(C_1-C_{20})$Alkyl-(meth)acrylat-Copolymeren möglich, wie sie in der EP-A 457 178 beschrieben sind. Kanten und Raffalten der so beschichteten Hüllen sind nach beliebiger Lagerdauer ungeschädigt und die Beschichtung bleibt beim Brühen trübungsfrei. Nachteil der Beschichtung mit (Meth)acrylat-Copolymeren ist allerdings ihre relativ starke Neigung zum Blocken, trotz des hohen Molekulargewichts (rel. Viskosität: größer als 3,0).

Von einem innenbeschichteten Faserdarm wird erwartet, daß er eine hohe Wasserdampfbarriere (Gewichtsverlust von 1 kg Fleischwurst in einer Kaliber-60 Hülle: weniger als 1 % pro Woche) und eine hohe Sauerstoffbarriere aufweist (keine Verfärbung von Kalbsleberwurst nach 6 Wochen Lagerzeit). Ferner wird gefordert, daß die Raffalten und Flachlegekanten bei beliebig langer Lagerdauer ungeschädigt bleiben und daß die Innenbeschichtung keine Heißwassertrübung beim Brühen zeigt.

Überraschend hat sich gezeigt, daß sich die Aufgabe lösen läßt mit einer schlauchförmigen Nahrungsmittelhülle auf Basis von regenerierter Cellulose mit einer innenbeschichteten Oberfläche, die dadurch gekennzeichnet ist, daß die Beschichtung mindestens ein Copolymer mit 60 bis 75 Gew.-% Einheiten aus Vinylidenchlorid, 3 bis 10 Gew.-% Einheiten aus Acrylnitril, 1 bis 10 Gew.-%, bevorzugt 2 bis 8 Gew.-%, Einheiten aus Acrylsäure und 8 bis 27 Gew.-% Einheiten aus (Meth)acrylsäure-$(C_1-C_{18})$alkylester enthält. Die $(C_1-C_{18})$Alkylgruppe in dem genannten Ester ist vorzugsweise unverzweigt und hat besonders bevorzugt nicht mehr als 6 C-Atome. Zu nennen sind insbesondere die Methyl-, Ethyl-, Propyl-, Butyl-, Pentyl- und Hexylgruppe.

Bevorzugt ist ein Copolymer, das 68 bis 72 Gew.-% Einheiten aus Vinylidenchlorid, 5 bis 7 Gew.-% Einheiten aus Acrylnitril, 2 bis 4 Gew.-% Einheiten aus Acrylsäure und 17 bis 25 Gew.-% Einheiten aus (Meth)acrylsäureethylester enthält.

"(Meth)acrylsäure" bzw. "(Meth)acrylsäureester" steht in diesem Zusammenhang für "Acrylsäure und/oder Methacrylsäure" bzw. "Acrylsäureester und/oder Methacrylsäureester". Entsprechendes gilt für "(Meth)acrylat".

Allgemein beträgt der Anteil an Copolymer oder Copolymergemisch an der Innenbeschichtung mindestens 70 Gew.-%, vorzugsweise mindestens 90 Gew.-%, bezogen auf das Gesamtgewicht der Schicht. Die restlichen Anteile machen Wachse, Weichmacher (allgemein Glycerin), Entschäumer und andere, für solche Innenbeschichtungen übliche Komponenten aus.

Das Molekulargewicht des Copolymers sollte so hoch sein, daß seine relative Viskosität bei etwa 2,0 bis 3,5 liegt. Dazu wird die Durchlaufzeit einer 1 gew.-%igen Lösung des Copolymers in einem organischen Lösungsmittel wie Dimethylformamid (DMF) oder Dimethylsulfoxid (DMSO), vorzugsweise jedoch Tetrahydrofuran (THF), bei einer festen Temperatur (meistens 20 °C) bestimmt. Die relative Viskosität wird daraus nach der Formel

$$\eta_{rel.} = \frac{t_L \cdot s_L}{t_{LM} \cdot s_{LM}}$$

berechnet, worin t für die Durchlaufzeit der Lösung (L) bzw. des reinen Lösemittels (LM) und s für die jeweilige Dichte steht. Je höher der Anteil Einheiten aus Vinylidenchlorid ist, desto höher sollte die relative Viskosität sein, um die Kristallisation oder Eigenschaftsänderungen der Innenbeschichtung zu verhindern.

Die Copolymere sind ferner durch bestimmte Kristallisationsparameter gekennzeichnet. Zur Bestimmung dieser Parameter wird aus dem Copolymer zunächst ein Gießfilm hergestellt. Dazu wird die Dispersion auf eine Glasplatte gegossen und getrocknet. Der Film wird anschließend von der Glasplatte abgezogen.

Proben des Films werden jeweils 30 min lang bei einer Temperatur von 30, 60, 90 bzw. 130 °C gehalten. Nach dem Abkühlen wird der Brechungsindex der Filmproben mit einem üblichen Refraktometer gemessen. Das Molekulargewicht ist dann ausreichend, wenn sich die Brechungsindices der bei den verschiedenen Temperaturen gehaltenen Proben um nicht mehr als 0,004 Einheiten, bevorzugt nicht mehr als 0,002 Einheiten, voneinander unterscheiden. Noch erfindungsgemäß wäre also beispielsweise ein Film, dessen niedrigster Wert für den Brechungsindex bei 1,652 und dessen höchster bei 1,656 liegt.

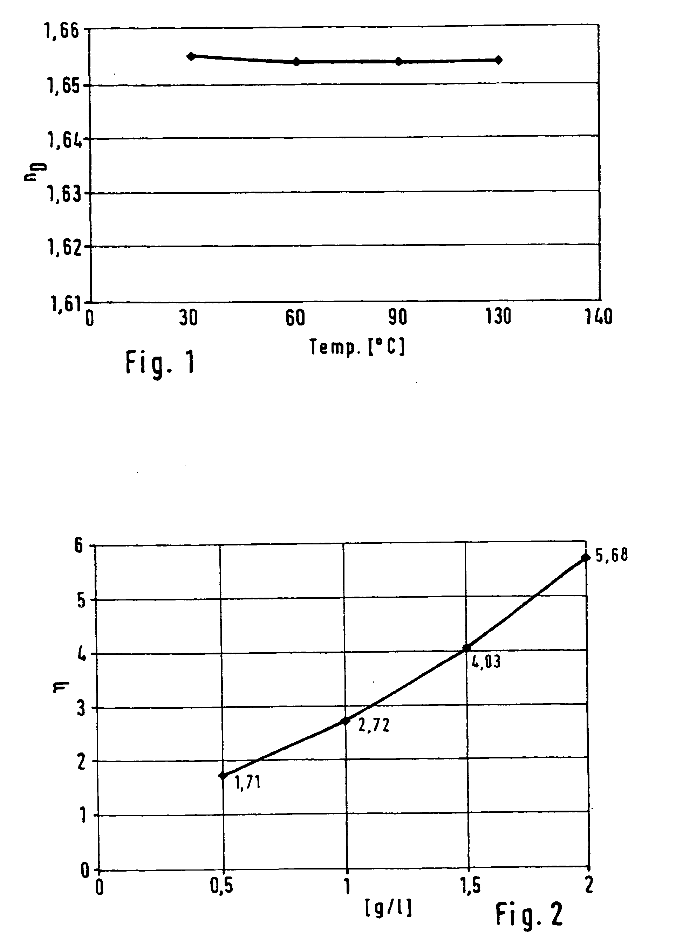

Fig. 1 zeigt den Brechungsindex $n_D$ eines Films aus einem Copolymer, das zu 70 Gew.-% aus Vinylidenchlorid-Einheiten, zu 5 Gew.-% aus Acrylnitril-Einheiten, zu 2 Gew.-% aus Acrylsäure-Einheiten und zu 23 Gew.-% aus Ethylacrylat-Einheiten bestand. Proben dieses Film sind jeweils 30 min. bei den angegebenen Temperaturen gehalten worden. Aus der Meßkurve läßt sich ablesen, daß sich der Brechungsindex und damit der Kristallisationsgrad im Bereich von 30 bis 130 °C praktisch nicht ändert.

Fig. 2 zeigt die relative Viskosität $\eta_{rel.}$ des Copolymers aus Fig. 1 in Abhängigkeit von der Konzentration, bestimmt an einer 1 gew.%igen Lösung in THF bei 20 °C.

Das Gewicht der Innenbeschichtung beträgt allgemein 8 bis 20 $g/m^2$, bevorzugt 10 bis 14 $g/m^2$. Die Wasserdampfdurchlässigkeit der innenbeschichteten Hüllen, bestimmt nach DIN 53122, liegt allgemein bei 4 bis 20 g pro Quadratmeter und pro Tag, bevorzugt bei 6 bis 10 $g/m^2 \cdot d$. Die Innenbeschichtung bildet eine praktisch fehlerfreie, durchgehende Schicht. Der Gewichtsverlust von 1 kg Brühwurst in einer erfindungsgemäßen, faserverstärkten Hülle vom Kaliber 60 liegt bei Lagerung im Kühlraum (7 °C, 65 % relative Feuchte) daher allgemein bei nicht mehr als etwa 0,2 bis 1,5 % pro Woche, meistens bei nicht mehr als etwa 0,5 und 1,2 % pro Woche.

Die Sauerstoffdurchlässigkeit der erfindungsgemäßen Hülle beträgt allgemein 4 bis 25 $cm^3/m^2 \cdot d \cdot bar$, bestimmt nach DIN 53380. Sie reicht aus, um Verfärbungen bei Leberwurst selbst bei einer Lagerdauer von 8 Wochen sicher zu verhindern.

Struktur und Qualität der Innenbeschichtung werden auch beeinflußt von den Eigenschaften des Grundmaterials, d.h. der schlauchförmigen Hülle auf Basis von regenerierter Cellulose. Besonders geeignet für die Zwecke der vorliegenden Erfindung ist ein Grundmaterial mit einer relativ hohen Wasserdurchlässigkeit (= Wasserpermeation). Dementsprechend sollte die Wasserpermeation der Hülle vor der Innenbeschichtung bei einem Innendruck von 40 bar bei 85 und 125 $l/m^2d$, vorzugsweise zwischen 90 und 115 $l/m^2d$, liegen. Die Permeationswerte hängen vor allem ab von der Struktur der äußeren und damit zuerst ausgefällten Bereiche der Viskoseschicht. Durch die dabei gebildete Membran aus regenerierter Cellulose muß die Fällflüssigkeit hindurchdiffundieren, um die Regenerierung auch in den tiefer liegenden Bereichen der Viskoseschicht zu bewirken. Beeinflussen läßt sich die Permeation beispielsweise durch Zusätze zu der Viskoselösung oder durch Variation der Fällbedingungen. Besonders einfach geschieht dies durch Zudosieren von in Wasser verdünnten, schwachen organischen Säuren zu der Viskoselösung kurz vor der Spinndüse, wie in der DE-A 34 16 405 beschrieben. Allgemein werden dafür 1 bis 3 gew.%ige Lösungen von Oxalsäure, Essigsäure, Ameisensäure, Propionsäure, Milchsäure, Weinsäure, oder Citronensäure verwendet. So läßt sich die Permeation durch den Zusatz einer 1,5 bis 2 gew.-%igen wäßrigen Ameisen- oder Essigsäurelösung um 20 bis 30 % erhöhen.

Das Grundmaterial kann auch gefärbt sein. Dazu wird die zu seiner Herstellung verwendete Viskoselösung zweckmäßig mit Farbstoff oder Farbpigment vermischt.

Die Kanten und Falten, die beim Flachlegen und Aufrollen bzw. beim Raffen (Aufstocken) der frisch hergestellten Hülle entstehen, führen überraschend selbst nach längerer Lagerzeit nicht zu einer Schädigung. Das ist bemerkenswert, denn in den bisher üblichen Hüllen war die Kristallisation weder beim Cellulosehydrat noch bei der Innenbeschichtung abgeschlossen, wenn sie flachgelegt und aufgerollt oder wenn sie gerafft wurde. Das oben beschriebene Copolymer erreicht dagegen schnell seine Endstruktur und kristallisiert dann auch bei erhöhter Temperatur nicht mehr weiter. Darüber hinaus wird die Innenbeschichtung auch bei längerem Kontakt mit heißem Wasser (d.h. unter Bedingungen, wie sie beim Brühen der Wurst herrschen) nicht trübe. Die erfindungsgemäßen Hüllen besitzen dabei gleichzeitig sehr gute mechanische Eigenschaften. Zu nennen sind die hohe Zähigkeit, hohe Festigkeit und besondere Geschmeidigkeit. Bisher wurde es für unvermeidbar gehalten, daß PVDC-innenbeschichtete Hüllen, insbesondere innenbeschichtete Faserhüllen, durch die bei der Herstellung und Verarbeitung entstehenden Kanten und Falten geschädigt werden. Ebenso unvereinbar waren bisher hohe Zähigkeit, Festigkeit und Geschmeidigkeit mit Trübungsfreiheit.

Die erfindungsgemäße, innenbeschichtete Nahrungsmittelhülle kann bei der Herstellung von verschiedenen Wurstsorten verwendet werden, so beispielsweise von Brüh- wie auch von Leberwurst. Bisher mußten dafür verschiedene Hüllentypen eingesetzt werden.

Die erfindungsgemäßen Nahrungsmittelhüllen zeigen zudem eine überraschend gute Heißrauchdurchlässigkeit. Für eine optimale Rauchdurchlässigkeit sollte der Anteil an Vinylidenchlorid-Einheiten in dem zur Innenbeschichtung verwendeten Copolymer jedoch 70 Gew.-% möglichst nicht übersteigen.

Gegenstand der vorliegenden Erfindung ist schließlich auch ein Verfahren zur Herstellung der nahtlosen, innenbeschichteten schlauchförmigen Nahrungsmittelhüllen. In dem Verfahren wird eine wäßrige Dispersion des genannten Copolymers oder einer Mischung dieser Copolymere auf die innere Oberfläche der getrockneten schlauchförmigen Hülle auf Basis von regenerierter Cellulose aufgetragen und anschließend getrocknet. Ein besonders geeignetes Verfahren zur Innenbeschichtung sowie eine Vorrichtung dafür sind in der DE-B 30 12 250 (= US-A 4 357 371) beschrieben. Darin wird die Dispersion in einer Schlaufe des Schlauches stationär gehalten, während der Schlauch sich weiterbewegt. Dieses Verfahren ist allgemein als slug-coating bekannt. Die Auftragsmenge läßt sich mit Hilfe eines Quetschwalzenpaares einstellen. Die zum Beschichten verwendeten wäßrigen Dispersionen haben vorteilhaft einen Feststoffanteil zwischen 50 und 55 Gew.-%, bezogen auf ihr Gesamtgewicht. Wird die Innenbeschichtung nach dem in der DE-B 30 12 250 genannten Verfahren durchgeführt, so hat es sich als günstig erwiesen, die Dispersionen bis auf einen Feststoffanteil 16 bis 30 Gew.%, vorzugsweise 18 bis 25 Gew.-%, zu verdünnen. Durch den Zusatz von Emulgierhilfsmitteln lassen sich die Dispersionen noch weiter stabilisieren. Besonders geeignete Hilfsmittel sind Alkyl-, Aryl-, Alkylaryl-sulfonate und -sulfate. Der Anteil dieser Hilfsmittel liegt allgemein bei bis zu 6 Gew.-%, bezogen auf das Gewicht der zu dispergierenden Polymere. Zweckmäßigerweise enthält die Dispersion darüber hinaus noch geringe Mengen an Entschäumer, vorzugsweise Silikonentschäumer. Durch den Zusatz von Wachs, vorzugsweise eines natürlichen Wachses, läßt sich das Zusammenhaften der Innenbeschichtung beim Flachlegen der Hülle sicher verhindern. Ein Anteil an Wachs von 1 bis 4 Gew.-%, bezogen auf das Gewicht des Copolymers, hat sich dabei als günstig erwiesen. Die Trocknung der beschichten Hüllen kann beispielsweise in einem Trockentunnel erfolgen, der an seinem Eingang beispielsweise eine Temperatur von 80 °C hat. Die Temperatur steigt langsam, bis sie am Ende des Tunnels beispielsweise 140 °C erreicht.

Durch vorheriges Imprägnieren der Celluloseoberfläche mit einem Haftvermittler kann die Haftung der Innenbeschichtung noch gesteigert werden. Besonders gut geeignet zur Imprägnierung sind Kondensationsprodukte aus Epichlorhydrin und einem Polyamin-Polyamid. Die Menge des Haftvermittlers beträgt allgemein 30 bis 100 mg/m$^2$. Die Imprägnierung ist üblicherweise durchlässig für Wasser und Wasserdampf. Die Imprägnierung wird üblicherweise auf die innere Oberfläche des regenerierten, gewaschenen und weichgemachten Schlauches aufgebracht. Anschließend wird der Schlauch getrocknet.

In den folgenden Beispielen beziehen sich auf bevorzugte Ausführungsformen der vorliegenden Erfindung. Prozente sind darin Gewichtsprozente, soweit nicht anders angegeben.

Beispiel 1:

Ein aus Hanffaserpapier (Gewicht des Papiers: 17 g/m$^2$) geformter Schlauch mit einem Durchmesser von 60 mm (= Kaliber 60) auf der Innen- und Außenseite mit Viskoselösung beaufschlagt. Die Viskoselösung wurde dabei so verteilt, daß 40 % davon außen und 60 % innen auf das Papier aufgetragen wurden. Nach dem üblichen Regenerieren und Waschen wurde der so erhaltene Gelschlauch mit Glycerin weichgemacht. Vor dem Einlauf in den Trockner wurde in den Gelschlauch eine Verankerungslösung (Polyamin-Polyamid-Epichlorhydrin-Vorkondensat) eingefüllt. Der Schlauch wird dann zwischen zwei Quetschwalzenpaaren im aufgeblasenen Zustand in einem Heißlufttrockner getrocknet, auf einen Wassergehalt von 12 % eingestellt ("konditioniert") und aufgewickelt.

Die Innenbeschichtung wurde gemäß der DE-B 30 12 250 aufgetragen. Dazu wurde in eine Schlaufe eines etwa 900 m langen Schlauches ausreichend wäßrige Beschichtungsdispersion eingefüllt, die

| | |
|---|---|
| 20 % | Copolymer der im folgenden angegebenen Zusammensetzung, |
| 1,5 % | Glycerin und |
| 0,5 % | KPS-Wachs enthielt. |

Die Dispersion wurde durch den gesamten Schlauch hindurchbewegt. Das Copolymere enthielt 70 % Einheiten aus Vinylidenchlorid, 5 % Einheiten aus Acrylnitril, 2 % Einheiten aus Acrylsäure und 23 % Einheiten aus Ethylacrylat.

Die relative Viskosität einer 1 %igen Lösung des Copolymers in THF lag bei 2,72; der Brechungsindex des Films lag bei 1,653; er änderte sich zwischen 30 und 120 °C nicht, d. h. der Film erreichte schnell seine Endstruktur und kristallisierte danach nicht weiter.

Über den Walzenspalt des Quetschwalzenpaares wurde ein Beschichtungsgewicht von 12 bis 14 $g/m^2$ eingestellt: Die Hülle wurde in aufgeblasenem Zustand getrocknet. Die Oberflächentemperatur der Hülle lag am Ausgang des Trockners bei etwa 160 °C.

Nach dem Verlassen des Trockners wurde der Schlauch befeuchtet, bis der Wassergehalt bei 8 bis 10 % lag. Er wurde anschließend flachgelegt und auf eine Rolle aufgewickelt. Die Wasserdampfdurchlässigkeit des beschichteten Schlauches lag bei 8 $g/m^2d$ und die Sauerstoffdurchlässigkeit bei 15 $cm^3/m^2d$ bar.

Nach einer Lagerdauer der Rollen von 10 Tagen bei Raumtemperatur wurde das Material zu Raupen gerafft; Raffalten und Kanten blieben nach beliebig langem Lagern fehlerfrei. Für Praxistests wurden die Raupen nach sechswöchiger Lagerung bei normalem Raumklima eine Woche unter Tropenbedingungen (36 °C, 85 % r. F.) gelagert und anschließend mit Fleisch- bzw. Leberwurstbrät gefüllt.

Bei beiden Wurstsorten ließen sich keine Fehlstellen (Raffalten, Kanten) feststellen und die Beschichtung blieb bei der Wurstherstellung völlig trübungsfrei. Der Gewichtsverlust der Fleischwurst (1 kg) erreichte 0,8 % pro Woche. Die Würste blieben über mehrere Wochen prall. Die Leberwurst war auch nach sechswöchiger Kühlraumlagerung noch nicht verfärbt, d. h. es trat keine Oxidation an der Oberfläche ein.

Beispiel 2:

Ein wie üblich hergestellter doppelviskosierter, d.h. innen und außen viskosierter (Viskoseverteilung: 50 % außen und 50 % innen), braun eingefärbter Cellulosehydratschlauch von Kaliber 75 mit einer Faserverstärkung aus Hanffaserpapier (Papiergewicht: 21 $g/m^2$) wurde zunächst mit Glycerin weichgemacht. Vor dem Einlauf in den Trockner wurde in den Gelschlauch die in Beispiel 1 beschriebene Verankerungslösung eingefüllt. Der Schlauch wurde anschließend wie üblich in aufgeblasenem Zustand getrocknet, konditioniert und aufgewickelt.

Die Innenbeschichtung wurde wie im Beispiel 1 beschrieben unter Verwendung der gleichen Dispersion hergestellt.

Das Beschichtungsgewicht wurde auf 13 bis 15 $g/m^2$ eingestellt. Nach einer Lagerzeit von 2 Wochen wurde das Material gerafft. Raffalten und Kanten waren nach beliebig langer Lagerdauer fehlerfrei. Damit hergestellte Fleischwurst verlor bei Lagerung im Kühlraum 0,4 % an Gewicht pro Woche. Leberwurst blieb über 6 Wochen unverfärbt. Die Beschichtung war trübungsfrei.

Beispiel 3:

Ein nicht gefärbter Cellulosehydratschlauch von Kaliber 60 mit einer Verstärkung aus Hanffaserpapier (wie im Beispiel 1 beschrieben) wurde mit einer wäßrigen Dispersion beschichtet, die -

| | |
|---|---|
| 22 % | des im folgenden näher definierten Copolymers, |
| 2 % | Glycerin und |
| 0,5 % | KPS-Wachs |

enthielt. Das Copolymer bestand zu 75 % aus Vinylidenchlorid-Einheiten, zu 5 % aus Acrylnitril-Einheiten, zu 1 % aus Acrylsäure-Einheiten und zu 19 % aus Ethylacrylat-Einheiten. Die relative Viskosität einer 1 %igen Lösung des Copolymers in THF lag bei 2,8.

Bei einem Gewicht der Innenbeschichtung von 12 g/m$^2$ wurde eine Wasserdampfdurchlässigkeit von 6 g/m$^2$·d und eine Sauerstoffdurchlässigkeit von 12 cm$^3$/m$^2$ · d gemessen.

Das Material wurde nach 3 Wochen zu Raupen gerafft, die bei beliebig langer Lagerdauer weder geschädigte Raffalten noch Flachlegekanten aufweisen. Bei der Wurstherstellung bleibt die Beschichtung völlig trübungsfrei.

Der Gewichtsverlust von Fleischwurst (1 kg) beträgt bei Lagerung im Kühlraum 0,6 % pro Woche. Leberwurst zeigte nach 6 Wochen keine Verfärbung an der Oberfläche.

Beispiel 4:

Ein wie üblich hergestellter, nicht faserverstärkter Cellulosehydratschlauch (Kaliber 45) wurde vor der Trocknung mit der im Beispiel 1 beschriebenen Verankerungslösung imprägniert. Das dabei verwendete Polyamin-Polyamid-Epichlorhydrin-Kondensationsprodukt wurde dabei in einer Menge von 65 mg/m$^2$ aufgetragen. Nach dem Trocknen wurde der Schlauch auf einen Rest-Wassergehalt von 12 % eingestellt. Er besaß dann einen Quellwert von 150 % und eine Wasserpermeation von 70 l/m$^2$·d bei einem Druck von 40 bar.

Die Innenbeschichtung wurde wie im Beispiel 1 beschrieben aufgetragen. Es wurde die gleiche Beschichtungsdispersion verwendet wie im Beispiel 1 und die Hülle wurde im aufgeblasenen Zustand bei einer Trockner-Endtemperatur von 155 °C getrocknet. Die Auftragsmenge betrug 10 g/m$^2$.

Die Wasserdampfdurchlässigkeit der so hergestellten Hülle lag bei 8,8 g/m$^2$ · d bei 23 °C und 85 % relativer Feuchte.

**Patentansprüche**

1. Schlauchförmige Nahrungsmittelhülle auf Basis von regenerierter Cellulose mit einer innenbeschichteten Oberfläche, **dadurch gekennzeichnet, daß** die Beschichtung eine durchgehende Schicht bildet und mindestens ein Copolymer mit 60 bis 75 Gew.-% Einheiten aus Vinylidenchlorid, 3 bis 10 Gew.-% Einheiten aus Acrylnitril, 1 bis 10 Gew.-% Einheiten aus Acrylsäure und 8 bis 27 Gew.-% Einheiten aus (Meth)acrylsäure-(C$_1$-C$_{18}$)alkylester enthält.

2. Nahrungsmittelhülle gemäß Anspruch 1, **dadurch gekennzeichnet, daß** das Copolymer 68 bis 72 Gew.-% Einheiten aus Vinylidenchlorid, 5 bis 7 Gew.- % Einheiten aus Acrylnitril, 2 bis 4 Gew.-% Einheiten aus Acrylsäure und 17 bis 25 Gew.-% Einheiten aus (Meth)acrylsäure-ethylester enthält.

3. Nahrungsmittelhülle gemäß Anspruch 1 oder 2, **dadurch gekennzeichnet, daß** das Copolymer eine relative Viskosität η von 2,0 bis 3,5 besitzt.

4. Nahrungsmittelhülle gemäß einem oder mehreren der Ansprüche 1 bis 3, **dadurch gekennzeichnet, daß** das Gewicht der Beschichtung 8 bis 20 g/m$^2$, bevorzugt 10 bis 14 g/m$^2$, beträgt.

5. Nahrungsmittelhülle gemäß einem oder mehreren der Ansprüche 1 bis 4 **dadurch gekennzeichnet, daß** die Beschichtung zu mindestens 70 Gew.-%, bevorzugt zu mindestens 90 Gew.-%, bezogen auf das Gesamtgewicht der Beschichtung, aus dem mindestens einen Copolymer besteht.

6. Nahrungsmittelhülle gemäß einem oder mehreren der Ansprüche 1 bis 5, **dadurch gekennzeichnet, daß** die Beschichtung zusätzlich ein Wachs umfaßt, vorzugsweise in einer Menge von bis zu 4 Gew.-%, bezogen auf das Gewicht des Copolymers.

7. Nahrungsmittelhülle gemäß einem oder mehreren der Ansprüche 1 bis 6, **dadurch gekennzeichnet**, däß ihre Wasserdampfdurchlässigkeit, bestimmt nach DIN 53122, bei 4 bis 20 g/m$^2$·d, bevorzugt 6 bis 10 g/m$^2$ · d, liegt.

8. Nahrungsmittelhülle gemäß einem oder mehreren der Ansprüche 1 bis 7, **dadurch gekennzeichnet, daß** ihre Sauerstoffdurchlässigkeit, bestimmt nach DIN 53380, bei 4 bis 25 cm$^3$/m$^2$ · d bar liegt.

9. Nahrungsmittelhülle gemäß einem oder mehreren der Ansprüche 1 bis 8, **dadurch gekennzeichnet, daß** sie auf ihrer inneren Oberfläche imprägniert ist mit einem Mittel, das eine Verankerung der später aufgebrachten Innenbeschichtung bewirkt, bevorzugt mit einem Kondensationsprodukt aus Epichlorhydrin und einem Polyamin-Polyamid.

10. Nahrungsmittelhülle gemäß einem oder mehreren der Ansprüche 1 bis 9, **dadurch gekennzeichnet, daß** sie faserverstärkt ist, bevorzugt mit einem Faserpapier, besonders bevorzugt mit Hanffaserpapier.

11. Nahrungsmittelhülle gemäß einem oder mehreren der Ansprüche 1 bis 10, **dadurch gekennzeichnet, daß** die Permeation des schlauchförmigen Nahrungsmittelhülle auf Basis von regenerierter Cellulose bei einem Innendruck von 40 bar bei 85 bis 125 l/m$^2$d, bevorzugt bei 90 bis 115 l/m$^2$d, liegt.

12. Nahrungsmittelhülle gemäß einem oder mehreren der Ansprüche 1 bis 11, **dadurch gekennzeichnet, daß** sie heißrauchdurchlässig ist.

13. Verfahren zur Herstellung der Nahrungsmittelhülle gemäß einem oder mehreren der Ansprüche 1 bis 12, **dadurch gekennzeichnet, daß** eine wäßrige Dispersion eines Copolymers mit 60 bis 75 Gew.% Einheiten aus Vinylidenchlorid, 3 bis 10 Gew.-% Einheiten aus Acrylnitril, 1 bis 10 Gew.-% Einheiten aus Acrylsäure und 8 bis 27 Gew.-% Einheiten aus (Meth)acrylsäure-(C$_1$-C$_{18}$)alkylester auf die innere Oberfläche einer gegebenenfalls faserverstärkten, schlauchförmigen- Hülle auf Basis von regenerierter Cellulose aufgebracht und anschließend getrocknet wird.

14. Verfahren gemäß Anspruch 13, **dadurch gekennzeichnet, daß** die Dispersion einen Feststoffgehalt von 50 bis 55 % besitzt.

15. Verfahren gemäß Anspruch 13 oder 14, **dadurch gekennzeichnet, daß** die Dispersion zusätzlich Glycerin enthält, vorzugsweise in einem Anteil von bis zu 10 Gew.-%, bezogen auf das Gesamtgewicht der Dispersion.

**Claims**

1. A tubular food casing based on regenerated cellulose having an internally coated surface, wherein the coating forms a continuous layer and comprises at least one copolymer having 60 to 75% by weight of vinylidene chloride units, 3 to 10% by weight of acrylonitrile units, 1 to 10% by weight of acrylic acid units and 8 to 27% by weight of (C$_1$-C$_{18}$) alkyl (meth)acrylate units.

2. The food casing as claimed in claim 1, wherein the copolymer comprises 68 to 72% by weight of vinylidene chloride units, 5 to 7% by weight of acrylonitrile units, 2 to 4% by weight of acrylic acid units and 17 to 25% by weight of ethyl (meth)acrylate units.

3. The food casing as claimed in claim 1 or 2, wherein the copolymer has a relative viscosity η of 2.0 to 3.5.

4. The food casing as claimed in one or more of claims 1 to 3, wherein the weight of the coating is 8 to 20 g/m$^2$, preferably 10 to 14 g/m$^2$.

5. The food casing as claimed in one or more of claims 1 to 4, wherein the coating consists of at least one copolymer at at least 70% by weight, preferably at at least 90% by weight, based on the total weight of the coating.

6. The food casing as claimed in one or more of claims 1 to 5, wherein the coating additionally comprises a wax, preferably in an amount of up to 4% by weight, based on the weight of the copolymer.

7. The food casing as claimed in one or more of claims 1 to 6, wherein its water vapor permeability determined as specified in DIN 53122 is 4 to 20 g/m$^2$·d, preferably 6 to 10 g/m$^2$·d.

8. The food casing as claimed in one or more of claims 1 to 7, wherein its oxygen permeability determined as specifed in DIN 53380 is 4 to 25 cm$^3$/m$^2$·d·bar.

9. The food casing as claimed in one or more of claims 1 to 8, wherein it is impregnated on its inner surface with an agent which causes anchoring of the inner coating which is applied later, preferably with a condensation product of epichlorohydrin and a polyamine-polyamide.

10. The food casing as claimed in one or more of claims 1 to 9, wherein it is fiber-reinforced, preferably with a fiber paper, particularly preferably with hemp fiber paper.

11. The food casing as claimed in one or more of claims 1 to 10, wherein the permeation of the tubular food casing based on regenerated cellulose is 85 to 125 l/m$^2$d, preferably 90 to 115 l/m$^2$d, at an internal pressure of 40 bar.

12. The food casing as claimed in one or more of claims 1 to 11, wherein it is hot-smoke permeable.

13. A process for producing the food casing as claimed in one or more of claims 1 to 12, which comprises applying an aqueous dispersion of a copolymer having 60 to 75% by weight of vinylidene chloride units, 3 to 10% by weight of acrylonitrile units, 1 to 10% by weight of acrylic acid units and 8 to 27% by weight of ($C_1$-$C_{18}$) alkyl (meth)-acrylate units to the inner surface of a tubular casing based on regenerated cellulose, which casing may be fiber-reinforced, and subsequently drying the casing.

14. The process as claimed in claim 13, wherein the dispersion has a solids content of 50 to 55%.

15. The process as claimed in claim 13 or 14, wherein the dispersion additionally comprises glycerol, preferably at a content of up to 10% by weight, based on the total weight of the dispersion.

**Revendications**

1. Enveloppe tubulaire pour aliments à base de cellulose régénérée ayant une surface revêtue intérieurement, **caractérisée en ce que** le revêtement forme une couche continue et contient au moins un copolymère ayant 60 à 75% en poids d'unités chlorure de vinylidène, 3 à 10% en poids d'unités acrylonitrile, 1 à 10% en poids d'unités acide acrylique et 8 à 27% en poids d'unités ester d'alkyle ($C_1$-$C_{18}$) d'acide (méth)-acrylique.

2. Enveloppe pour aliments selon la revendication 1, **caractérisée en ce que** le copolymère contient 68 à 72% en poids d'unités chlorure de vinylidène, 5 à 7% en poids d'unités acrylonitrile, 2 à 4% en poids d'unités acide acrylique et 17 à 25% en poids d'unités ester d'alkyle ($C_1$-$C_{18}$) d'acide (méth)-acrylique.

3. Enveloppe pour aliments selon la revendication 1 ou 2, **caractérisée en ce que** le copolymère a une viscosité relative n de 2,0 à 3,5.

4. Enveloppe pour aliments selon l'une quelconque des revendications 1 à 3, **caractérisée en ce que** le poids du revêtement est de 8 à 20 g/m$^2$, de préférence de 10 à 14 g/m$^2$.

5. Enveloppe pour aliments selon l'une quelconque des revendications 1 à 4, **caractérisée en ce que** le revêtement est à base d'au moins 70% en poids, de préférence d'au moins 90% en poids, par rapport au poids total du revêtement, dudit copolymère.

6. Enveloppe pour aliments selon l'une quelconque des revendications 1 à 5, **caractérisée en ce que** le revêtement comprend en outre une cire, de préférence en une quantité allant jusqu'à 4% en poids, par rapport au poids du copolymère.

7. Enveloppe pour aliments selon l'une quelconque des revendications 1 à 6, **caractérisée en ce que** sa perméabilité à la vapeur d'eau, déterminée selon la norme DIN 53122, se situe à une valeur de 4 à 20 g/m$^2$.d, de préférence de 6 à 10 g/m$^2$. d.

8. Enveloppe pour aliments selon l'une quelconque des revendications 1 à 7, **caractérisée en ce que** sa perméabilité à l'oxygène, déterminée selon la norme DIN 53380, se situe à une valeur de 4 à 35 cm$^3$/m$^2$.d/bar.

9. Enveloppe pour aliments selon l'une quelconque des revendications 1 à 8, **caractérisée en ce qu'**elle est imprégnée, sur sa surface interne, d'un agent qui assure un ancrage du revêtement intérieur appliqué par la suite, de préférence d'un produit de condensation d'épichlorhydrine et d'une polyamine/polyamide.

10. Enveloppe pour aliments selon l'une quelconque des revendications 1 à 9, **caractérisée en ce qu'**elle est renforcée par des fibres, de préférence avec un papier de fibres, mieux encore avec un papier de fibres de chanvre.

11. Enveloppe pour aliments selon l'une quelconque des revendications 1 à 10, **caractérisée en ce que** la perméation de l'enveloppe tubulaire pour aliments à base de cellulose régénérée se situe, sous une pression interne de 40 bars, à une valeur de 85 à 125 1/m$^2$.d, de préférence de 90 à 115 1/m$^2$.d.

**12.** Enveloppe pour aliments selon l'une quelconque des revendications 1 à 11, **caractérisée en ce qu'**elle est perméable à la fumée chaude.

**13.** Procédé de fabrication de l'enveloppe pour aliments selon l'une quelconque des revendications 1 à 12, **caractérisé en ce qu'**on applique une dispersion aqueuse d'un copolymère ayant 60 à 75% en poids d'unités chlorure de vinylidène, 3 à 10% en poids d'unités acrylonitrile, 1 à 10% en poids d'unités acide acrylique et 8 à 27% en poids d'unités ester d'alkyle ($C_1$-$C_{18}$) d'acide (méth)acrylique sur la surface interne d'une enveloppe tubulaire éventuellement renforcée par des fibres à base de cellulose régénérée et **en ce qu'**on la sèche ensuite.

**14.** Procédé selon la revendication 13, **caractérisé en ce que** la dispersion possède une teneur en solide de 50 à 55%.

**15.** Procédé selon la revendication 13 ou 14, **caractérisé en ce que** la dispersion contient en outre de la glycérine, de préférence en une teneur allant jusqu'à 10% en poids, par rapport au poids total de la dispersion.

Fig. 1

Fig. 2